# EUROPEAN PATENT SPECIFICATION

(11) **EP 2 043 301 B1**
(45) Date of publication and mention of the grant of the patent: **03.11.2010**
(21) Application number: 07745370.2
(22) Date of filing: 15.06.2007
(51) Int. Cl.: H04L 12/28, H04B 3/54, H05B 37/02

(54) **Wireless LAN system**
Drahtloses LAN-system
Système LAN sans fil

(30) Priority: 13.07.2006 JP 2006192878
(43) Date of publication of application: 01.04.2009
(73) Proprietor: NEC Corporation, Minato-ku Tokyo 108-8001 (JP)
(72) Inventor: KIRIBAYASHI, Shinji, Minato-ku Tokyo 108-8001 (JP)
(74) Representative: Schöniger, Franz-Josef
(86) International application number: PCT/JP2007/062115
(87) International publication number: WO 2008/007514

(56) References cited:
- WO-A-2007/072284
- US-A1- 2002 197 963
- US-A1- 2004 192 227
- US-A1- 2005 185 398

## Description

### Technical Field

This application claims priority based on Japanese Patent Application No. 2006-192878 filed on July 13, 2006.

The present invention relates to a wireless LAN system.

### Background Art

Recently, it has been common to construct wireless LAN systems in general homes.

Generally, in a wireless LAN system, a wireless LAN access point performs wireless communication with a LAN client terminal, which is a personal computer or the like, to connect the wireless LAN client terminal to an external network. The wireless LAN access point connects to the external network directly or via a router.

For example, power line communication using a power line as a communication line can be used for making a connection between the wireless LAN access point and the external network (see Patent Document 1).

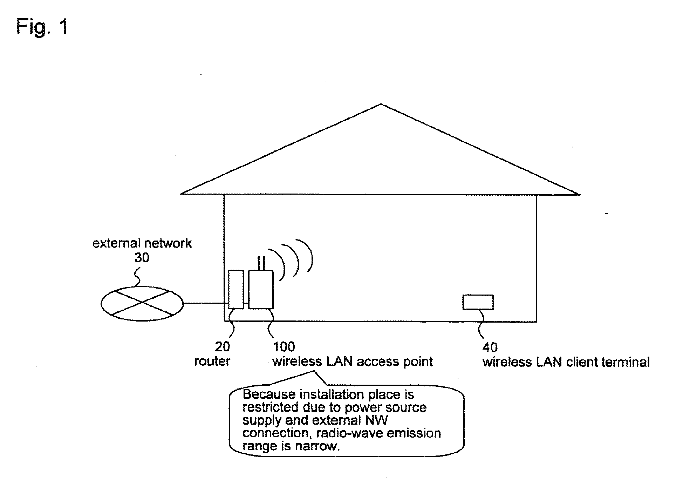

However, as shown in Figure 1, since it is necessary that common wireless LAN access point 100 be connected to a power source connection unit (receptacle) and be connected to external network 30 directly or via router 20, its installation place is restricted to a corner of a room or the like.

When wireless LAN access point 100 is installed in the corner of a room as described above, the range of emission of radio waves is narrow. Furthermore, since the range of emission of radio waves is narrow, the receiving sensitivity of wireless LAN client terminal 40 deteriorates if there is a physical obstacle in the way.

US 2002/0197963 A1 discloses a data communications system including a local beacon which, on the one side, is programmable and/or communicates with controlling and/or information communicating infrastructure means, for example a central service provider or the Internet and/or with one or more further local beacons, and which, on the other side, contains for wireless communication with one or more end devices located in its vicinity a transceiver combination or in special cases a transmitter only, and which is located in or in place of a electric lighting equipment.

Other wireless network devices are disclosed in US 2004/0192227 A1, US 2005/0185398 A1, and WO 2007/072284 A2, which is not state of the art in the sense of Article 54(2)EPC.

Patent Document 1: Japanese Patent Laid-Open No. 2001-244940

### Disclosure of the Invention

Accordingly, the object of the present invention is to provide a wireless LAN access system capable of emitting radio waves across a wide range of ratio wavelength. The present invention is defined in the independent claim.

As described above, according to the present invention, a wireless LAN access point is configured to be attached to a lighting apparatus.

When installed indoors, a lighting apparatus is usually installed at the upper center of a room, for example, on the ceiling, so that the light reaches over the whole room.

Therefore, it is advantageous that radio waves from the wireless LAN access point can also be widely emitted over the range where the light of the lighting apparatus reaches.

### Brief Description of the Drawings

Figure 1 is a diagram showing an example of the arrangement of a common wireless LAN system;
Figure 2 is a diagram showing an example of the arrangement of a wireless LAN system;
Figure 3 is a diagram showing an example of the configuration around a wireless LAN access point in the wireless LAN system shown in Figure 2;
Figure 4 is a diagram showing another example of the configuration around the wireless LAN access point in the wireless LAN system shown in Figure 2;
Figure 5 is a diagram showing still another example of the configuration around the wireless LAN access point in the wireless LAN system shown in Figure 2;
Figure 6 is a diagram showing an example of how to install the wireless LAN access point shown in Figure 2 to a lighting apparatus;
Figure 7 is a diagram showing another example of how to install the wireless LAN access point shown in Figure 2 to a lighting apparatus;
Figure 8 is a diagram showing still another example of how to install the wireless LAN access point shown in Figure 2 to a lighting apparatus;
Figure 9 is a diagram showing a further different example of how to install the wireless LAN access point shown in Figure 2 to a lighting apparatus;
Figure 10 is a diagram showing a still further different example of how to install the wireless LAN access point shown in Figure 2 to a lighting apparatus;
Figure 11A is a diagram showing an example of how to connect the wireless LAN access point shown in Figure 2 to an external network;
Figure 11B is a diagram showing an example of how to connect the wireless LAN access point shown in Figure 2 to an external network;
Figure 12A is a diagram showing another example of how to connect the wireless LAN access point shown in Figure 2 to an external network;
Figure 12B is a diagram showing another example of how to connect the wireless LAN access point shown in Figure 2 to an external network;
Figure 13 is a diagram showing still another example of how to connect the wireless LAN access point shown in Figure 2 to an external network;
Figure 14A is a diagram showing an example of how to install the wireless LAN access point shown in Figure 2 indoors;
Figure 14B is a diagram showing an example of how to install the wireless LAN access point shown in Figure 2 indoors;
Figure 15A is a diagram showing another example of how to install the wireless LAN access point shown in Figure 2 indoors;
Figure 15B is a diagram showing another example of how to install the wireless LAN access point shown in Figure 2 indoors;
Figure 16 is a diagram showing still another example of how to install the wireless LAN access point shown in Figure 2 indoors;
Figure 17 is a diagram showing an example of the operation of the wireless LAN system shown in Figure 2;
Figure 18 is a diagram showing an example of how to install the wireless LAN access point shown in Figure 2 outdoors;
Figure 19 is a diagram showing an example of the configuration around a wireless LAN access point in a wireless LAN system;
Figure 20 is a diagram showing an example of the configuration around a wireless LAN access point in a wireless LAN system of an exemplary embodiment; and
Figure 21 is a diagram showing an example of the configuration around a wireless LAN access point in a wireless LAN system of an exemplary embodiment.

### Best Mode for Carrying Out the Invention

Exemplary embodiments for carrying out the present invention will be described below with reference to drawings.

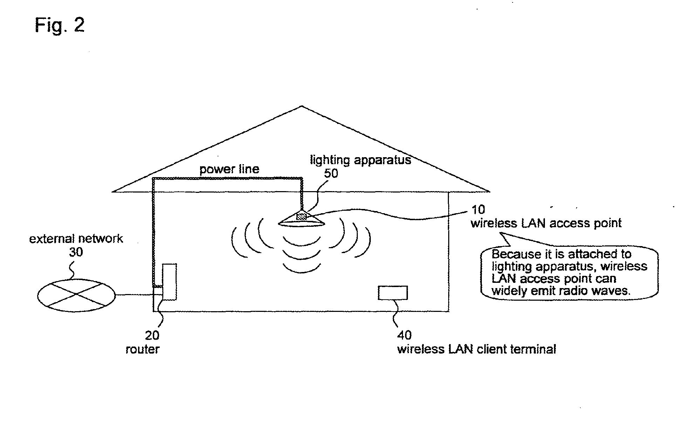

Figure 2 is a diagram showing an example of the arrangement of a wireless LAN system.

As shown in Figure 2, wireless LAN access point 10 is attached to lighting apparatus 50 in the wireless LAN system of this exemplary embodiment.

When installed indoors, lighting apparatus 50 is usually installed at the upper center of a room, for example, on the ceiling, so that the light reaches over the whole room. Therefore, it is possible to widely emit radio waves from wireless LAN access point 10 over the range where the light of lighting apparatus 50 reaches.

Wireless LAN access point 10 receives power source supply via a power line which is drawn to the ceiling and from which lighting apparatus 50 receives a power source supply.

Wireless LAN access point 10 connects to external network 30 by performing communication with external network 30 directly or via router 20.

Though Figure 2 shows an example of using power line communication for which a power line drawn to the ceiling is used as a communication line for making a connection between wireless LAN access point 10 and external network 30, the present invention is not limited thereto. Wireless communication or conventional network communication using a network cable, such as Ethernet, may be used.

In the case of using wireless communication or power line communication for making a connection between wireless LAN access point 10 and external network 30, among these cases, it is not necessary to provide new wiring on the wall and the ceiling, and therefore, it is possible to easily install wireless LAN access point 10 without necessity of wiring work.

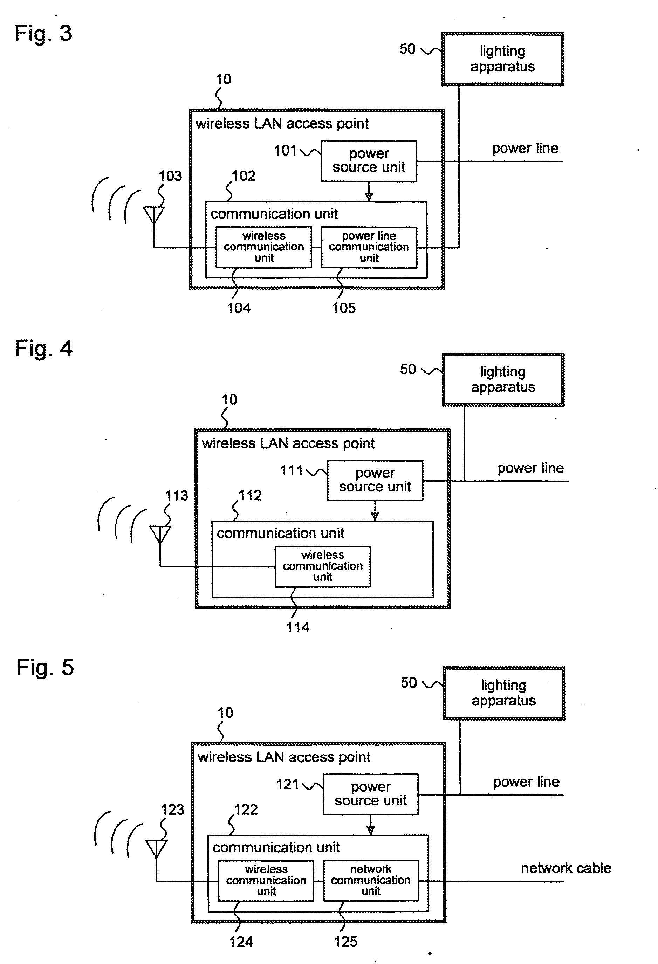

Figure 3 is a diagram showing an example of the configuration around wireless LAN access point 10 in the wireless LAN system shown in Figure 2.

Wireless LAN access point 10 shown in Figure 3 is configured to use power line communication for making a connection to external network 30, and it has power source unit 101, communication unit 102 and antenna 103. Communication unit 102 has wireless communication unit 104 and power line communication unit 105. In Figure 3, units unrelated to the present invention are omitted.

Power source unit 101 receives power source supply via a power line drawn to the ceiling and supplies the power source to communication unit 102.

Wireless communication unit 104 performs wireless communication with wireless LAN client terminal 40 via antenna 103. Power line communication unit 105 performs power line communication with external network 30 or router 20 via the power line drawn to the ceiling. Thereby, it is possible to connect wireless LAN access point 10 and external network 30 directly or via router 20.

Figure 4 is a diagram showing another example of the configuration around wireless LAN access point 10 in the wireless LAN system shown in Figure 2.

Wireless LAN access point 10 shown in Figure 4 is configured to use wireless communication for making a connection to external network 30, and it has power source unit 111, communication unit 112 and antenna 113. Communication unit 112 has wireless communication unit 114. In Figure 4, units unrelated to the present invention are omitted.

Power source unit 111 receives power source supply via a power line drawn to the ceiling and supplies the power source to communication unit 112.

Wireless communication unit 114 performs wireless communication with wireless LAN client terminal 40 via antenna 113. Furthermore, wireless communication unit 114 performs wireless communication with external network 30 or router 20 via antenna 113. Thereby, it is possible to connect wireless LAN access point 10 and external network 30 directly or via router 20.

Figure 5 is a diagram showing still another example of the configuration around wireless LAN access point 10 in the wireless LAN system shown in Figure 2.

Wireless LAN access point 10 shown in Figure 5 is configured to use network communication for making a connection to external network 30, and it has power source unit 121, communication unit 122 and antenna 123. Communication unit 122 has wireless communication unit 124 and network communication unit 125. In Figure 5, units unrelated to the present invention are omitted.

Power source unit 121 receives power source supply via a power line drawn to the ceiling and supplies the power source to communication unit 122.

Wireless communication unit 124 performs wireless communication with wireless LAN client terminal 40 via antenna 123. Furthermore, network communication unit 125 performs network communication, such as Ethernet communication, with external network 30 or router 20 via a network cable. Thereby, it is possible to connect wireless LAN access point 10 and external network 30 directly or via router 20.

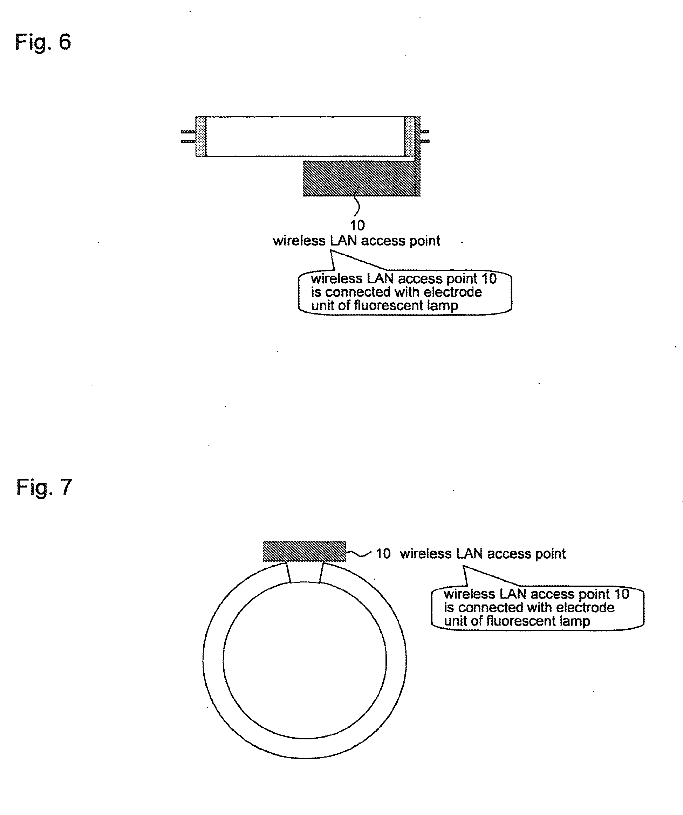

Here, description will be made on how to install wireless LAN access point 10 to lighting apparatus 50, with reference to Figures 6 to 10.

In the example shown in Figure 6, wireless LAN access point 10 is connected to the electrode unit of a rod-shaped fluorescent lamp of lighting apparatus 50.

In the example shown in Figure 7, wireless LAN access point 10 is connected to the electrode unit of a doughnut-shaped fluorescent lamp of lighting apparatus 50.

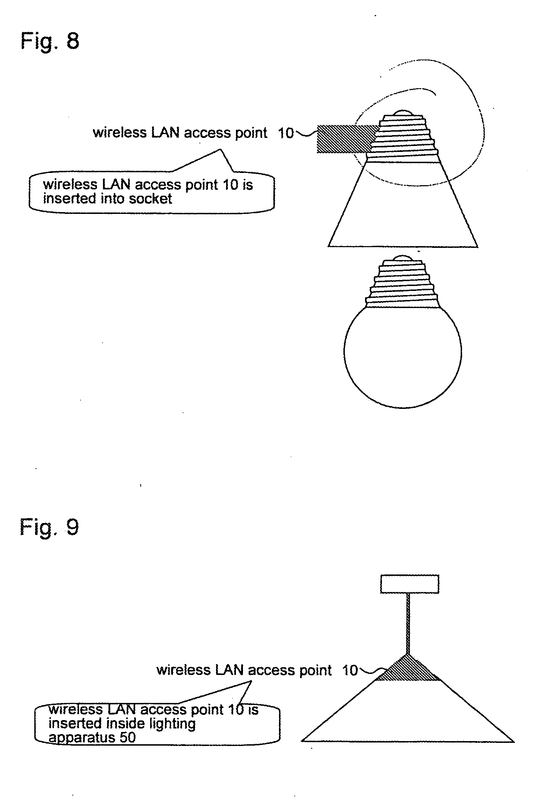

In the example shown in Figure 8, wireless LAN access point 10 is inserted in a socket for a light bulb or spherical shaped fluorescent lamp of lighting apparatus 50 and is connected with the connection unit of the socket to be connected with a light bulb or a fluorescent lamp.

In the example shown in Figure 9, wireless LAN access point 10 is inserted inside lighting apparatus 50 and connected with the connection unit of the socket to be connected with a light bulb or a fluorescent lamp.

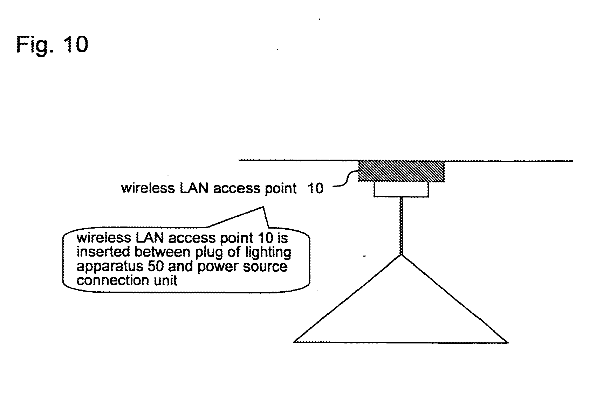

In the example shown in Figure 10, wireless LAN access point 10 is inserted between the plug of lighting apparatus 50 and a power source connection unit (receptacle) and connected with the connection unit between the plug and the power source connection unit.

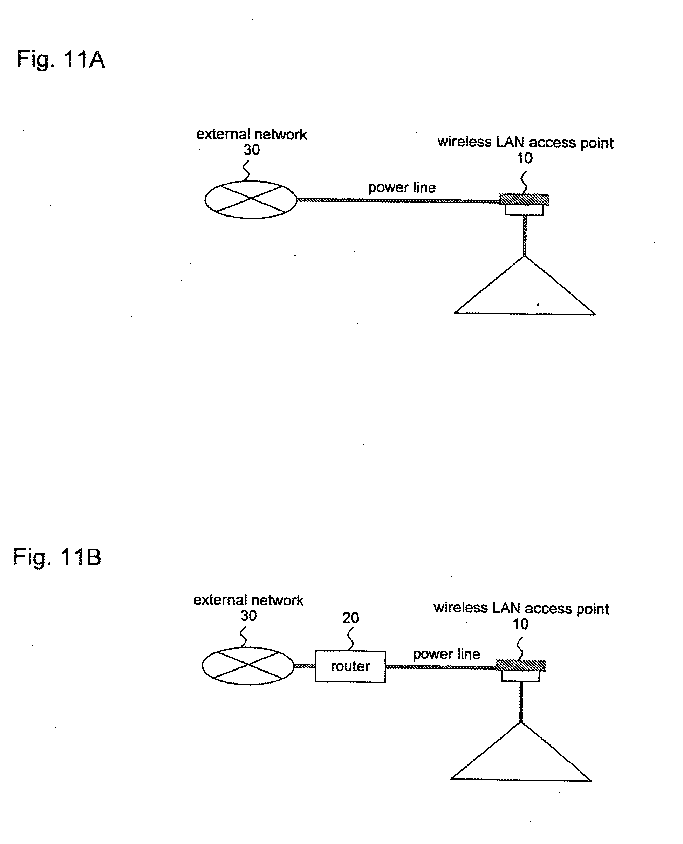

Next, description will be made on how to connect wireless LAN access point 10 and external network 30 with reference to Figures 11A to 13. In Figures 11A to 13, it is assumed that wireless LAN access point 10 is inserted between the plug of lighting apparatus 50 and the power source connection unit and attached, as shown in Figure 10.

In the examples shown in Figures 11A and 11B, power line communication is used for making a connection between wireless LAN access point 10 and external network 30. In Figure 11A, power line communication is directly used for making a connection between wireless LAN access point 10 and external network 30. In Figure 11B, power line communication is used for making a connection between wireless LAN access point 10 and router 20. For making a connection between router 20 and external network 30, a conventional communication method, for example, wired communication via an optical cable, a telephone line or a cable or wireless communication by a wireless LAN using a different frequency band or by WiMAX (Worldwide Interoperability for Microwave Access) is used.

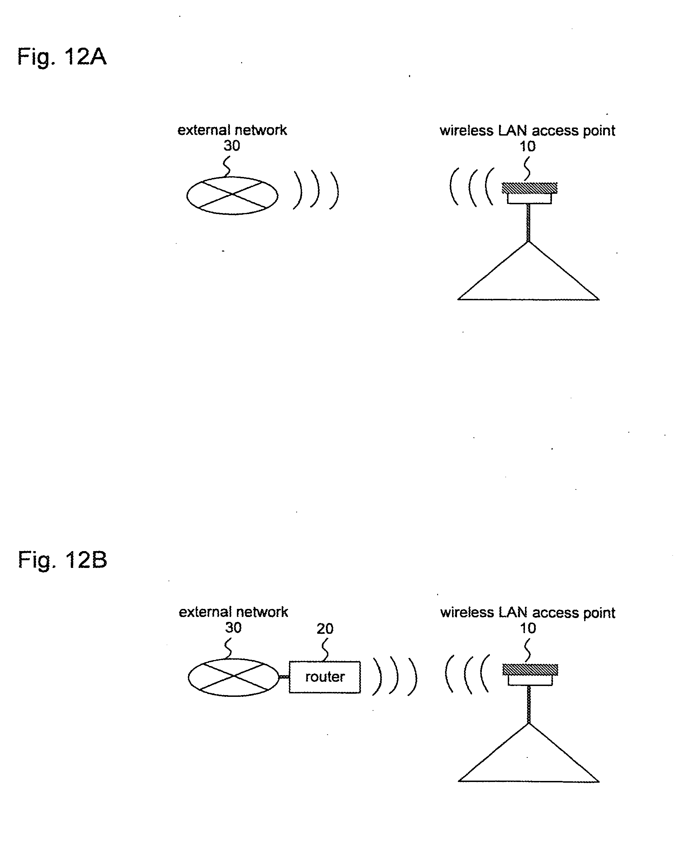

In the examples shown in Figures 12A and 12B, wireless communication is used for making a connection between wireless LAN access point 10 and external network 30. In Figure 12A, wireless communication is directly used for making a connection between wireless LAN access point 10 and external network 30. For example, wireless communication by a wireless LAN using a different frequency band or by WiMAX is used. In Figure 12B, wireless communication is used for making a connection between wireless LAN access point 10 and router 20. For example, wireless communication by a wireless LAN using a different frequency band or by WiMAX is used. For making a connection between router 20 and external network 30, a conventional communication method, for example, wired communication via an optical cable, a telephone line or a cable or wireless communication using a wireless LAN by a different frequency band or by WiMAX is used.

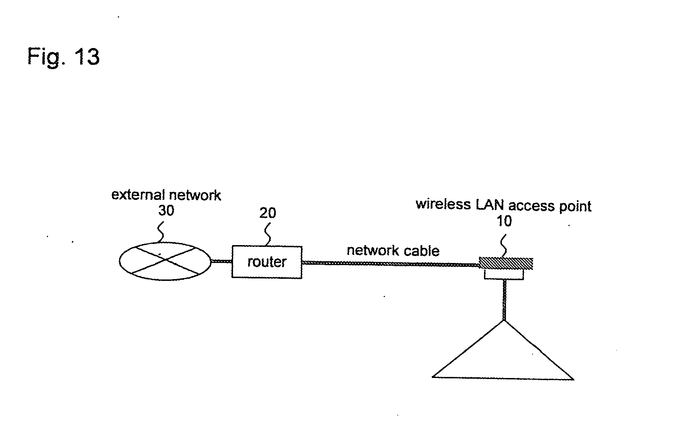

In the example shown in Figure 13, network communication is used for making a connection between wireless LAN access point 10 and external network 30. Specifically, conventional network communication, such as Ethernet communication, using a network cable is used for making a connection between wireless LAN access point 10 and router 20, and a conventional communication method, for example, wired communication via an optical cable, a telephone line or a cable, or wireless communication by a wireless LAN using a different frequency band or by WiMAX is used for making a connection between router 20 and external network 30.

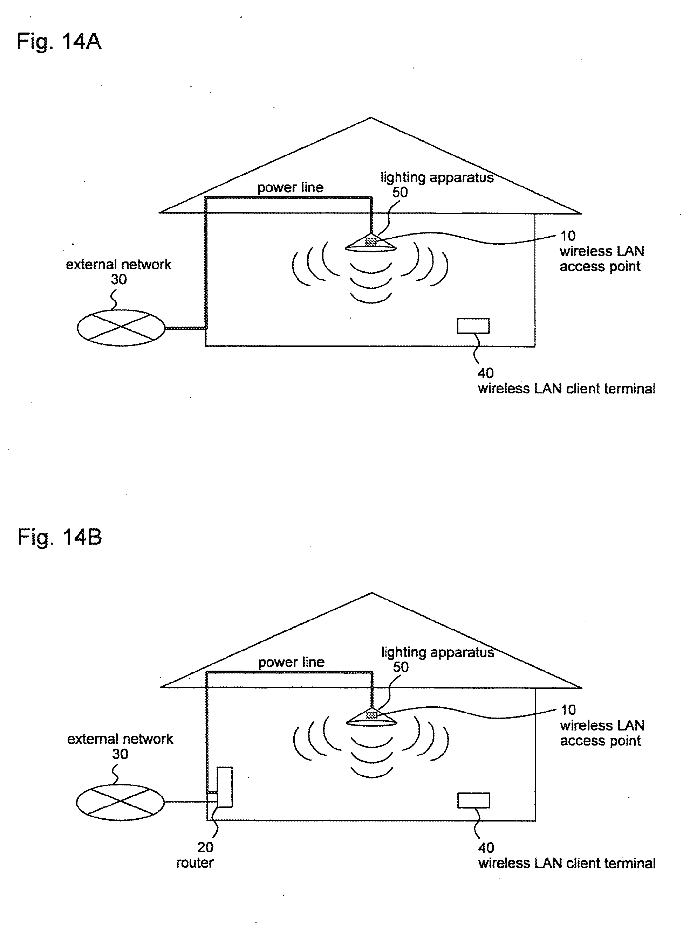

Next, description will be made on how to install wireless LAN access point 10 indoors, with reference to Figures 14A to 16.

In the examples shown in Figures 14A and 14B, wireless LAN access point 10 is installed indoors in the methods shown in Figures 11A and 11B. In Figure 14A, wireless LAN access point 10 uses power line communication to directly connect to external network 30. In Figure 14B, wireless LAN access point 10 uses power line communication, and uses router 20 to connect to external network 30.

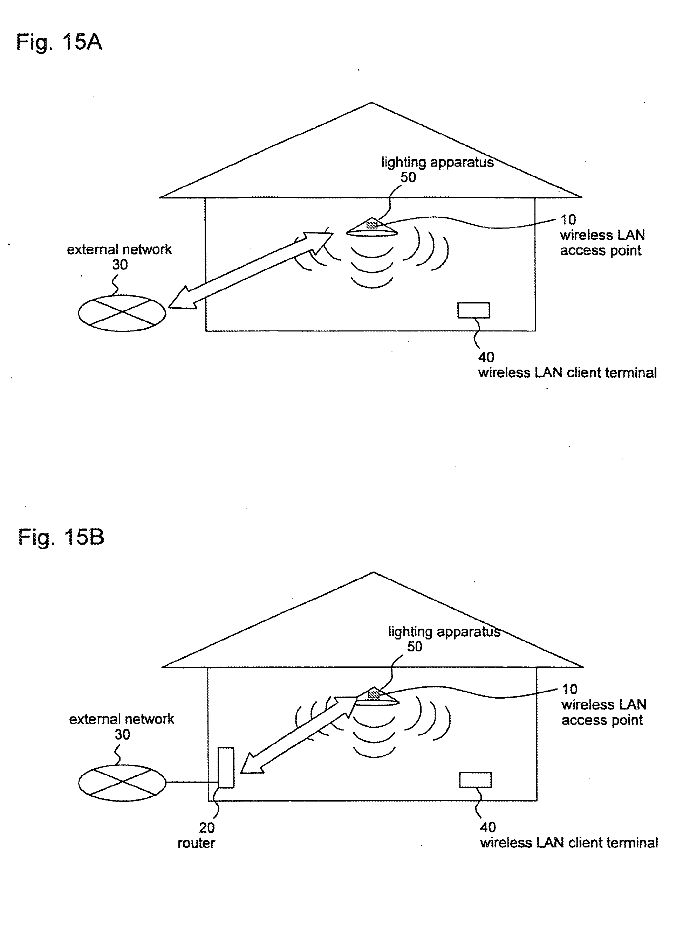

In the examples shown in Figures 15A and 15B, wireless LAN access point 10 is installed indoors in the methods shown in Figures 12A and 12B. In Figure 15A, wireless.LAN access point 10 uses wireless communication to directly connect to external network 30. In Figure 15B, wireless LAN access point 10 uses wireless communication, and uses router 20 to connect to external network 30.

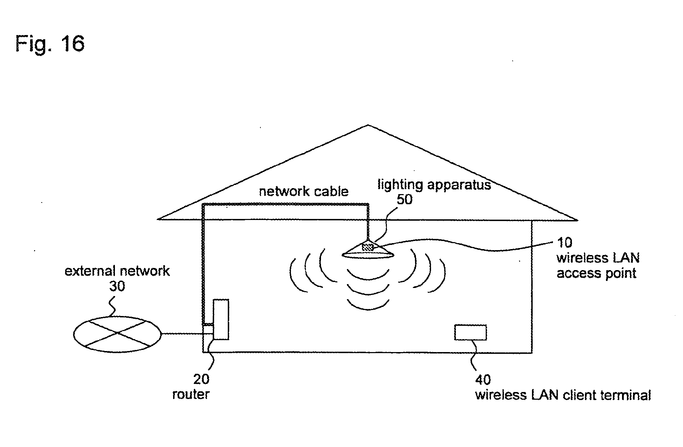

In the example shown in Figure 16, wireless LAN access point 10 is installed indoors in the method shown in Figure 13. Specifically, wireless LAN access point 10 uses network communication, and uses router 20 to connect to external network 30.

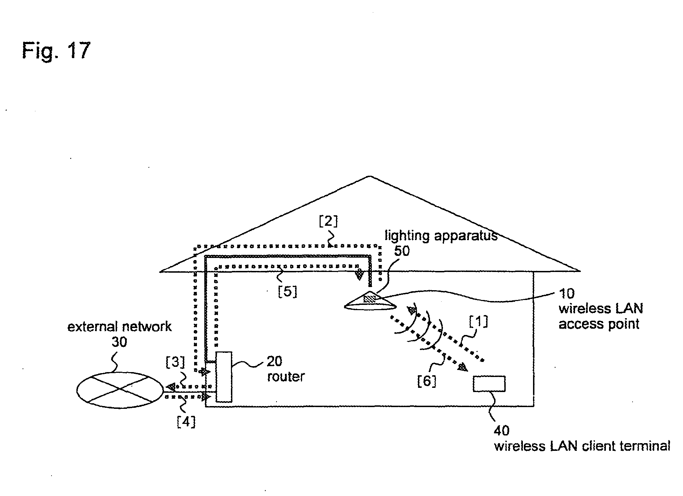

Now, description will be made on the operation of the wireless LAN system of this exemplary embodiment with reference to Figure 17. In Figure 17, it is assumed that wireless LAN access point 10 is installed as in Figure 14B.
[1] Wireless LAN client terminal 40 transmits data to wireless LAN access point 10 attached to lighting apparatus 50, using wireless communication.
[2] Next, wireless LAN access point 10 transmits the data transmitted from wireless LAN client terminal 40 to router 20, using power line communication.
[3] Next, router 20 transmits the data transmitted from wireless LAN access point 10 to external network 30.
[4] Router 20 receives the data from external network 30.
[5] Next, router 20 transmits the data received from external network 30 to wireless LAN access point 10 attached to lighting apparatus 50, using power line communication.
[6] After that, wireless LAN access point 10 transmits the data received from router 20 to wireless LAN client terminal 40, using wireless communication.

As described above, it is possible to widely emit radio waves from wireless LAN access point 10 over the range where the light of lighting apparatus 50 reaches, due to the configuration in which wireless LAN access point 10 is attached to lighting apparatus 50.

Furthermore, in the case of using wireless communication or power line communication for making a connection between wireless LAN access point 10 and external network 30, it is possible to easily install wireless LAN access point 10 without performing works such as the work for new wiring.

An example of installing wireless LAN access point 10 outdoors has been described. However, wireless LAN access point 10 can be also installed outdoors for public services and the like.

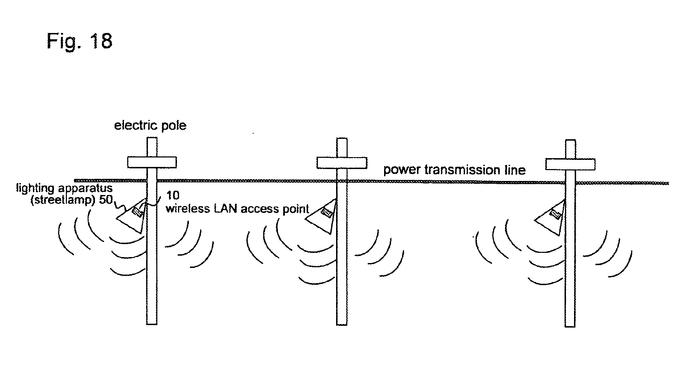

For example, as shown in Figure 18, wireless LAN access point 10 is attached to lighting apparatus 50 which is a streetlamp of electric pole on a roadside. For communication between wireless LAN access point 10 and router 20 not shown or external network 30, power line communication is used for which a power transmission line is used as a communication line.

Thereby, it is possible to widen the access range of a wireless LAN.

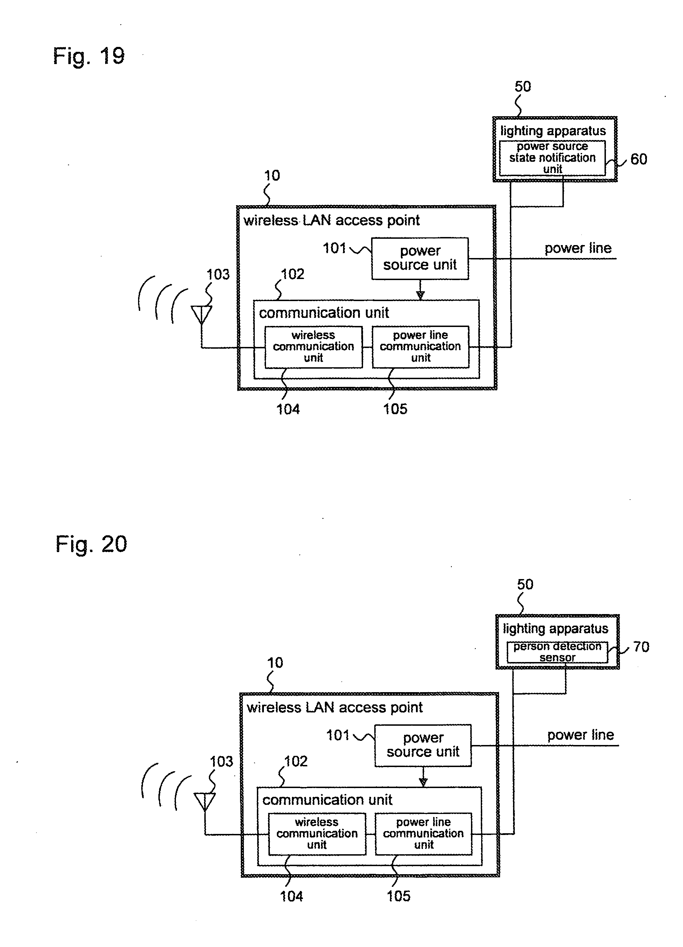

Figure 19 is a diagram showing an example of the configuration around wireless LAN access point 10 in a wireless LAN system of a second example. It is assumed that the wireless LAN system shown in Figure 19 uses power line communication for making a connection between wireless LAN access point 10 and external network 30. In Figure 19, the same reference numerals are given to units similar to the units in Figure 3, and the configuration of the part other than the units shown in Figure 19 is similar to the first configuration.

As shown in Figure 19, when compared to the configuration shown in Figure 3, the wireless LAN system of this example is different in that power source state notification unit 60 is attached to lighting apparatus 50.

Power source state notification unit 60 monitors the on/off state of the power source of lighting apparatus 50 and notifies the power source state of lighting apparatus 50 to wireless LAN access point 10. The way to make the notification to wireless LAN access point 10 is arbitrary. For example, power line communication can be used. Power source state notification unit 60 may be such that it is connected to the power source unit (not shown) of lighting apparatus 50 and directly monitors the power source unit, or it may be an optical sensor which detects the light of lighting apparatus 50.

Power source unit 101 controls power source supply to communication unit 102 according to the power source state of lighting apparatus 50 notified from power source state notification unit 60. For example, power source unit 101 supplies power source to communication unit 102 if the power source of lighting apparatus 50 is in the on state, and stops power source supply to communication unit 102 if the power source is in the off state. Furthermore, power source unit 101 can include a timer and can stop power source supply to communication unit 102 when a predetermined time elapses after the power source of lighting apparatus 50 changes from the on state to the off state.

As described above, in this example, it is possible to turn on/off wireless LAN access point 10 according to the on/off state of the power source of lighting apparatus 50. Therefore, it is possible to automatically turn off wireless LAN access point 10 when the power source of lighting apparatus 50 is turned off.

### (Exemplary embodiment)

Figure 20 is a diagram showing an example of the configuration around wireless LAN access point 10 in a wireless LAN system of an exemplary embodiment. It is assumed that the wireless LAN system shown in Figure 20 uses power line communication for making a connection between wireless LAN access point 10 and external network 30. In Figure 20, the same reference numerals are given to units similar to the unit in Figure 3, and the configuration of the part other than the units shown in Figure 20 is similar to the configuration in the first example.

As shown in Figure 20, when compared to the configuration shown in Figure 3, the wireless LAN system of this exemplary embodiment is different in that person detection sensor 70 is attached to lighting apparatus 50.

Person detection sensor 70 is a sensor which detects the presence of a person. When detecting the presence of a person, person detection sensor 70 notifies a detection signal to wireless LAN access point 10. The way to make the notification to wireless LAN access point 10 is arbitrary. For example, power line communication can be used. The type of person detection sensor is not especially limited. For example, an infrared sensor can be used which detects the presence of a person, when it emits light from a light-emitting device, and which then receives the light which has hit a person and which is reflected by a light-receiving device.

Power source unit 101 controls power source supply to communication unit 102 according to whether or not a detection signal has been notified from person detection sensor 70. For example, power source unit 101 can supply a power source to communication unit 102 when a detection signal has been notified from person detection sensor 70.

As described above, in this exemplary embodiment, it is possible to turn on/off wireless LAN access point 10 according to whether or not the presence of a person has been detected. Therefore, it is possible to automatically turn on wireless LAN access point 10 when a person is present.

In this exemplary embodiment, description has been made on the case where the present invention is applied to a wireless LAN system using power line communication for making a connection between wireless LAN access point 10 and external network 30, as an example. However, the present invention is not limited thereto. It goes without saying that the present invention is applicable to a wireless LAN using wireless communication or network cable communication.

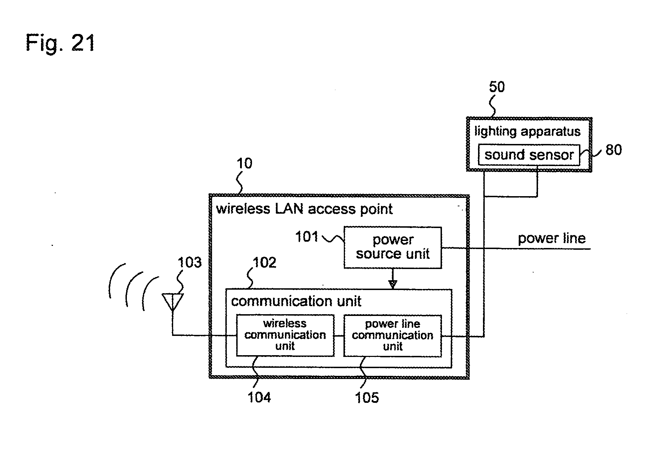

Figure 21 is a diagram showing an example of the configuration around wireless LAN access point 10 in a wireless LAN system of another exemplary embodiment. It is assumed that the wireless LAN system shown in Figure 21 uses power line communication for making a connection between wireless LAN access point 10 and external network 30. In Figure 21, the same reference numerals are given to units similar to the unit in Figure 3, and the configuration of the part other than the units shown in Figure 21 is similar to the configuration in the first example.

As shown in Figure 21, when compared to the configuration shown in Figure 3, the wireless LAN system of this exemplary embodiment is different in that sound sensor 80 is attached to lighting apparatus 50.

Sound sensor 80 is a sensor for detecting a sound. When detecting a sound, sound sensor 80 notifies a detection signal to wireless LAN access point 10. The way to make the notification to wireless LAN access point 10 is arbitrary. For example, power line communication can be used.

Power source unit 101 controls power source supply to communication unit 102 according to whether or not a detection signal has been notified from sound sensor 80. For example, power source unit 101 can supply a power source to communication unit 102 when a detection signal has been notified from sound sensor 80.

As described above, in this exemplary embodiment, it is possible to turn on/off wireless LAN access point 10 according to whether or not a sound has been detected. Therefore, it is possible to automatically turn on wireless LAN access point 10 when a person makes a sound.

In this exemplary embodiment, description has been made of the case where the present invention is applied to a wireless LAN system using power line communication for making a connection between wireless LAN access point 10 and external network 30, as an example. However, the present invention is not limited thereto. It goes without saying that the present invention is applicable to a wireless LAN using wireless communication or network cable communication.

## Claims

1. A wireless LAN system comprising a wireless LAN client terminal (40) and a wireless LAN access point (10) which performs wireless communication with the wireless LAN client terminal to connect the wireless LAN client terminal to an external network (30), wherein the wireless LAN access point is attached to a lighting apparatus (50), and receives a power source supply via a power line from which the lighting apparatus receives power source supply, wherein the wireless LAN access point comprises:
a communication unit (102,112,122) including a wireless communication unit (104,114,124) which performs wireless communication with the wireless LAN client terminal and
one of the following:
a) a power line communication unit (105) which performs power line communication with the external network or a router (20) connected to the external network via the power line,
b) said wireless communication unit (114) which also performs wireless communication with the external network or a router connected to the external network, or
c) a network communication unit (125) which performs network communication with the external network or a router connected to the external network via a network cable; and wherein
said wireless LAN access point further comprises a power source unit (101,111,121) which receives a power source supply via the power line and supplies the power source to the communication unit,
**characterised in that** the wireless LAN system further comprises a person detection sensor (70) which notifies a detection signal to the wireless LAN access point when detecting the presence of a person, or a sound sensor (80) which notifies a detection signal to the wireless LAN access point when detecting a sound; and
the power source unit controls a power source supply to the communication unit according to whether or not the detection signal has been notified from the person detection sensor or the sound sensor, respectively.

## Patentansprüche

1. Drahtloses LAN-System, umfassend ein drahtloses LAN-Client-Terminal (40) und einen drahtlosen LAN-Zugriffspunkt (10), der drahtlose Kommunikation mit dem drahtlosen LAN-Client-Terminal durchführt, um den drahtlosen LAN-Client-Terminal mit einem externen Netzwerk (30) zu verbinden, wobei der drahtlose LAN-Zugriffspunkt an einer Beleuchtungsvorrichtung (50) angebracht ist und über eine Stromleitung, von der die Beleuchtungsvorrichtung eine Stromquellenversorgung empfängt, eine Stromquellenversorgung empfängt, wobei der drahtlose LAN-Zugriffspunkt umfaßt:
eine Kommunikationseinheit (102, 112, 122), aufweisend eine drahtlose Kommunikationseinheit (104, 114, 124), die drahtlose Kommunikation mit dem drahtlosen LAN-Client-Terminal sowie einer der folgenden durchführt:
a) einer Stromleitungs-Kommunikaüonseinheit (105), die Stromleitungskommunikation mit dem externen Netzwerk oder einem Router (20) durchführt, der über die Stromleitung mit dem externen Netzwerk verbunden ist,
b) der drahtlosen Kommunikationseinheit (114), die darüber hinaus drahtlose Kommunikation mit dem externen Netzwerk oder einem Router durchführt, der mit dem externen Netzwerk verbunden ist, oder
c) einer Netzwerk-Kommunikatianseinheit (125), die Netzwerkkommunikation mit dem externen Netzwerk oder einem Router durchführt, der über ein Netzwerkkabel mit dem externen Netzwerk verbunden ist; und wobei der drahtlose LAN-Zugriffspunkt ferner eine Stromquelleneinheit (101, 111, 121) umfaßt, die über die Stromleitung eine Stromquellenversorgung empfängt und die Stromquelle der Kommunikationseinheit zuführt,
**dadurch gekennzeichnet, dass** das drahtlose LAN-System ferner einen Rersonendetektionssensor (70), der dem drahtlosen LAN-Zugriffspunkt beim Detektieren der Anwesenheit einer Person ein Detektionssignal übermittelt, oder einen Schallsensor (80) umfaßt, der dem drahtlosen LAN-Zugriffspunkt beim Detektieren von Schall ein Detektionssignal übermittelt; und
die Stromquelleneinheit in Übereinstimmung damit, ob ein Detektionssignal vom Personendetektionssensor oder dem Schallsensor übermittelt wurde oder nicht, eine Stromquellenversorgung an die Kommunikationseinheit steuert.

## Revendications

1. Système LAN sans fil comprenant un terminal client LAN sans fil (40) et un point d'accès LAN sans fil (10) qui effectue une communication sans fil avec le terminal client LAN sans fil afin de connecter le terminal client LAN sans fil à un réseau externe (30), dans lequel le point d'accès LAN sans fil est raccordé à un appareil d'éclairage (50), et reçoit une alimentation de source d'énergie par l'intermédiaire d'une ligne de transport d'énergie de laquelle l'appareil d'éclairage reçoit l'alimentation de source d'énergie, dans lequel le point d'accès LAN sans fil comprend :
une unité de communication (102, 112, 122) incluant une unité de communication sans fil (104, 114, 124) qui effectue une communication sans fil avec le terminal client LAN sans fil et une des unités qui suit :
a) une unité de communication de ligne de transport d'énergie (105) qui effectue une communication de ligne de transport d'énergie avec le réseau externe ou un routeur (20) connecté au réseau externe par l'intermédiaire de la ligne de transport d'énergie,
b) ladite unité de communication sans fil (114) qui effectue également une communication sans fil avec le réseau externe ou un routeur connecté au réseau externe, ou
c) une unité de communication de réseau (125) qui effectue une communication de réseau avec le réseau externe ou un routeur connecté au réseau externe par l'intermédiaire d'un câble de réseau ; et dans lequel
ledit point d'accès LAN sans fil comprend en outre une unité de source d'énergie (101, 111, 121) qui reçoit une alimentation de source d'énergie par l'intermédiaire de la ligne de transport d'énergie et fournit la source d'énergie à l'unité de communication,
**caractérisé en ce que** le système LAN sans fil comprend en outre un capteur de détection de personne (70) qui notifie un signal de détection au point d'accès LAN sans fil lors de la détection de la présence d'une personne, ou un capteur de son (80) qui notifie un signal de détection au point d'accès LAN sans fil lors de la détection d'un son ; et
l'unité de source d'énergie commande une alimentation de source d'énergie vers l'unité de communication selon si le signal de détection a été notifié ou non par le capteur de détection de personne ou le capteur de son, respectivement.
